# EUROPÄISCHE PATENTANMELDUNG

(11) **EP 3 016 271 A2**
(43) Veröffentlichungstag der Anmeldung: **04.05.2016**
(21) Anmeldenummer: 15003112.8
(22) Anmeldetag: 30.10.2015
(51) Int. Cl.: H02P 9/00

(54) **KRAFTANLAGE**

(30) Priorität: 31.10.2014 AT 8042014
(71) Anmelder: GE Jenbacher GmbH & Co. OG, 6200 Jenbach (AT)
(72) Erfinder: LU, Hang, 85356 Freising (DE); DHARMADHIKARI, Parag, 85375 Neufahrn bei Freising (DE)
(74) Vertreter: Torggler & Hofinger Patentanwälte

(57) **Zusammenfassung**

Kraftanlage (1), insbesondere Genset, umfassend eine Brennkraftmaschine (2) und einen von der Brennkraftmaschine (2) antreibbaren Hauptgenerator (3), wobei der Hauptgenerator (3) mit einem Energieversorgungsnetz (4) elektrisch verbunden ist, weiters umfassend einen von der Brennkraftmaschine (2) antreibbaren Hilfsgenerator (5), wobei ein Anschluss (6) des Hilfsgenerators (5) mit einem ersten Wechselspannungsanschluss (7) eines Leistungswandlers (8) verbunden ist, wobei ein Gleichspannungsanschluss (9) des Leistungswandlers (8) mit einem elektrischen Energiespeicher (10) verbunden ist, wobei ein zweiter Wechselspannungsanschluss (11) des Leistungswandlers (8) mit dem Energieversorgungsnetz (4) verbunden ist.

## Beschreibung

Die Erfindung betrifft eine Kraftanlage mit den Merkmalen des Oberbegriffs des Anspruchs 1 und ein Verfahren zum Betreiben einer Kraftanlage mit den Merkmalen des Oberbegriffs des Anspruchs 7.

Eine Kraftanlage wird eingesetzt, um ein mit der Kraftanlage verbundenes Energieversorgungsnetz mit Energie zu versorgen. Sie kann in Form eines Gensets vorliegen, umfassend eine Brennkraftmaschine und einen elektrischen Hauptgenerator, der mechanisch mit der Brennkraftmaschine gekoppelt und durch diese angetrieben ist und der mit dem Energieversorgungsnetz elektrisch verbunden ist. Typischerweise ist die Brennkraftmaschine als Hubkolbengasmotor ausgeführt, der häufig eine relativ geringe Massenträgheit aufweist. Um besser auf transiente Lastsituationen im Energieversorgungsnetz reagieren zu können, ist es aus dem Stand der Technik auch bekannt, einen elektrischen Energiespeicher vorzusehen, der über einen Wechselspannungzu-Gleichspannung-Leistungswandler mit einem elektrischen Hilfsgenerator verbunden ist, wobei der Hilfsgenerator mechanisch mit der Brennkraftmaschine gekoppelt und durch diese angetrieben ist. Während Phasen von Fluktuationen der mit dem Energieversorgungsnetz verbundenen Lasten wird der elektrische Energiespeicher geladen oder entladen, wodurch entweder überschüssige Energie vom Hilfsgenerator aufgenommen oder elektrische Energie für den Hilfsgenerator bereitgestellt wird. Obwohl die bekannten Kraftanlagen stabilisierte Gensets bei schwankenden Lastsituationen ermöglichen, ist eine effektivere und sehr schnelle Antwort auf andere Netzereignisse (zB ein Kurzschlussfehler oder ein Low-Voltage-Ride-Through-Ereignis) wünschenswert.

Aufgabe der vorliegenden Erfindung ist es, die Antwort der Kraftanlage auf Lastschwankungen oder andere Netzereignisse wie beispielsweise Kurzschlussfehler oder Low-Voltage-Ride-Through (LVRT) Ereignisse zu verbessern.

Diese Aufgabe wird durch eine Kraftanlage gemäß Anspruch 1 und ein Verfahren gemäß Anspruch 7 gelöst. Vorteilhafte Ausgestaltungen sind in den abhängigen Ansprüchen angegeben.

Gemäß der Erfindung ist ein zweiter Wechselspannungsanschluss des Leistungswandlers mit dem Energieversorgungsnetz verbunden. Dadurch ist der Leistungswandler elektrisch direkt mit dem Energieversorgungsnetz verbunden. Durch diese direkte Verbindung kann die Reaktionsfähigkeit der Kraftanlage in Reaktion auf Lastschwankungen oder andere Netzereignisse verbessert werden. Insbesondere ist es möglich, elektrische Energie direkt vom Energiespeicher in das Energieversorgungsnetz einzuspeisen.

Darüber hinaus ist es möglich, beide Generatoren (Hauptgenerator und Hilfsgenerator) so zu betreiben, dass sie elektrische Energie ins Netz speisen, wodurch eine Lastaufteilung zwischen diesen Generatoren erzielt wird. Diese Aufteilung der Last, die einerseits durch den Hauptgenerator und andererseits durch den Hilfsgenerator bereitgestellt wird, verbessert die Stabilität aller involvierten Vorrichtungen (Brennkraftmaschine, Hauptgenerator und Hilfsgenerator) und ermöglich es, diese Geräte unter Kontrolle zu halten und zum Beispiel während Netzereignissen nicht mit zu hohen oder zu niedrigen Geschwindigkeiten zu laufen. Dies ist insbesondere in Fällen wichtig, in denen das Energieversorgungsnetz während Netzereignissen mit der Kraftanlage verbunden bleiben muss, zum Beispiel aufgrund von Netzanschlussregeln.

Mit der vorgeschlagenen Lösung kann ein Genset mit einer Brennkraftmaschine oder Gasturbine mittels dem elektrischen Energiespeicher und dem Hilfsgenerator mit höheren Drehzahlen hochgefahren werden, im Vergleich zu einer Standard-Startprozedur mit einer Batterie, da die Energie des Hilfsgenerators höher ist als jene eines normalen Starters, sodass die Brennkraftmaschine schneller gestartet werden kann.

Weitere Vorteile der Erfindung umfassen:
- Schnelle Reaktion auf Lastschwankungen und andere Netzereignisse;
- Verbesserte Leistungsstabilität;
- Erfüllung von Netzanschlussregeln und Lasterfordernissen;
- Verbessern der Lastablehnungs- und Lastakzeptanzleistung im Fall, dass das Genset in einem Inselnetz betrieben wird;
- Kontrolle von Drehzahlüberschreitung, wodurch ein separater Bremsmechanismus vermieden wird;
- Redundanz durch den Hilfsgenerator für den Fall, dass der Hauptgenerator unter Wartung ist;
- Ein Kurbelmechanismus kann vermieden werden;
- Sehr schnelles Hochfahren mit steiler Rampe;
- Von Netzfrequenz unabhängige Steuerung, da der Hilfsgenerator keine direkte Verbindung zum Energieversorgungsnetz hat, sondern über den Leistungswandler mit dem Energieversorgungsnetz verbunden ist;
- Absorbieren der Stöße im Energieversorgungsnetz durch Glätten von Lastschritten und durch das Nichtdurchlassen von Netzschwankungen zur Brennkraftmaschine.

Es kann vorgesehen sein, dass ein Leistungsverhältnis von Nennleistung des Hauptgenerators zu Nennleistung des Hilfsgenerators mindestens 1,5 beträgt, wobei das Leistungsverhältnis vorzugsweise etwa 4 beträgt. Der Hauptgenerator kann zum Beispiel eine Nennleistung von 8 MW haben und der Hilfsgenerator kann eine Nennleistung von 2 MW haben. Daher stellen in diesem Beispiel der Hauptgenerator und der Hilfsgenerator eine elektrische Gesamtleistung von 10 MW bereit. Der Hauptgenerator ist direkt mit dem Energieversorgungsnetz verbunden und der Hilfsgenerator ist mittels Leistungswandler mit dem Energieversorgungsnetz verbunden. Durch diese Konfiguration muss nur ein relativ geringer Teil der elektrischen Gesamtleistung durch den Leistungswandler hindurch passieren. Daher ist der Leistungswandler effizienter verglichen mit Konfigurationen, bei denen die gesamte elektrische Gesamtleistung durch den Leistungswandler hindurch passieren muss. Weiters können dadurch kleinere und damit billigere Leistungswandler verwendet werden, welche einen geringeren Kühlbedarf haben,

Gemäß einer vorteilhaften Ausführungsform kann vorgesehen sein, dass der Hauptgenerator und der Hilfsgenerator als separate elektrische Generatoren ausgebildet sind. Sowohl der Hauptgenerator als auch der Hilfsgenerator können mechanisch an eine Motorwelle der Brennkraftmaschine gekoppelt sein.

Es kann auch vorgesehen sein, dass der Hauptgenerator und der Hilfsgenerator als ein einziger von der Brennkraftmaschine antreibbarer elektrischer Generator ausgebildet sind, wobei der Hauptgenerator ein Hauptwicklungssystem angeordnet an einem Stator des Generators umfasst und der Hilfsgenerator ein Hilfswicklungssystem angeordnet am Stator umfasst. In einer Konfiguration gemäß dieser Ausführungsform ist kein separater physischer Hilfsgenerator erforderlich. Die Leiter der Wicklungssysteme können durch Lackbeschichtungen isoliert sein.

Es kann vorgesehen sein, dass ein Wicklungsverhältnis von Hauptwicklungssystem zu Hilfswicklungssystem mindestens 1,5 beträgt, wobei das Wicklungsverhältnis vorzugsweise etwa 4 beträgt. In solchen Konfigurationen korrespondiert das Wicklungsverhältnis zum Verhältnis der Nennleistung des Hauptgenerators zur Nennleistung des Hilfsgenerators.

Gemäß einer vorteilhaften Ausführungsform ist eine Steuervorrichtung vorgesehen, wobei über wenigstens eine Signalleitung wenigstens ein Betriebszustand von Energieversorgungsnetz und/oder Brennkraftmaschine und/oder Hauptgenerator und/oder Hilfsgenerator und/oder Energiespeicher an die Steuervorrichtung meldbar ist, wobei der Leistungswandler in Abhängigkeit des wenigstens einen Betriebszustands von der Steuervorrichtung über eine Steuerleitung ansteuerbar ist. Mittels Steuerleitung steuert die Steuervorrichtung die Insulated Gate Bipolar Transistoren (IGBT) in den Leistungswandler-Schaltkreisen, um die Energie-Flussrichtung und Frequenz zu steuern.

In Bezug auf das Verfahren wird vorgeschlagen, dass ein zweiter Wechselspannungsanschluss des Leistungswandlers mit dem Energieversorgungsnetz verbunden ist, wobei in Abhängigkeit wenigstens eines Betriebszustands von Energieversorgungsnetz und/oder Brennkraftmaschine und/oder Hauptgenerator und/oder Hilfsgenerator und/oder Energiespeicher eine Flussrichtung elektrischer Energie durch den Leistungswandler hindurch gesteuert wird.

Durch das Steuern der Flussrichtung der elektrischen Energie durch den Leistungswandler hindurch ist es beispielsweise möglich, die Brennkraftmaschine aktiv abzubremsen und nicht unnötigerweise überschüssige Energie vom Genset zu verschwenden.

Die folgenden elektrischen Energieflüsse oder Leistungsflüsse können mit der vorgeschlagenen Kraftanlage erzielt werden:
- Leistungsfluss vom Hilfsgenerator über den Leistungswandler zum Energieversorgungsnetz im normalen Betriebsmodus;
- Energie vom Hilfsgenerator und elektrischen Energiespeicher über den Leistungswandler zum Energieversorgungsnetz, wenn die Leistungsanforderung des Energieversorgungsnetzes höher ist, als durch das Genset erzeugt;
- Energie vom Hilfsgenerator zum elektrischen Energiespeicher über den Leistungswandler, wenn die Leistungsanforderung vom Energieversorgungsnetz niedriger ist als vom Genset erzeugt und der elektrische Energiespeicher Kapazität zur Aufnahme der Energie hat;
- Energie vom elektrischen Energiespeicher und/oder vom Energieversorgungsnetz zum Hilfsgenerator zum Hochfahren der Brennkraftmaschine;
- Energie kann auch vom Energieversorgungsnetz direkt über den Leistungswandler zum elektrischen Energiespeicher übertragen werden.

Es kann vorgesehen sein, dass bei einer Leistungsanforderung des Energieversorgungsnetzes größer einer von Hauptgenerator und Hilfsgenerator bereitgestellten elektrischen Gesamtleistung eine im Energiespeicher gespeicherte elektrische Energie durch den Leistungswandler hindurch in das Energieversorgungsnetz eingespeist wird, vorzugsweise mittels Ansteuerung des Leistungswandlers. Wenn die Leistungsanforderung vom Energieversorgungsnetz höher ist als die aktuelle Energie vom Genset kann auch vorgesehen sein, die Motorleistung der Brennkraftmaschine zu erhöhen und dadurch elektrische Energie vom Energiespeicher zum Energieversorgungsnetz zu liefern.

Weiters kann vorgesehen sein, dass bei einer Leistungsanforderung des Energieversorgungsnetzes kleiner einer von Hauptgenerator und/oder Hilfsgenerator bereitgestellten elektrischen Leistung elektrische Energie vom Energieversorgungsnetz und/oder vom Hilfsgenerator durch den Leistungswandler hindurch in den Energiespeicher eingespeist wird, vorzugsweise mittels Ansteuerung des Leistungswandlers. Wenn die Leistungsanforderung vom Energieversorgungsnetz geringer ist als die aktuelle Energie des Gensets kann auch vorgesehen sein, die Motorleistung der Brennkraftmaschine zu reduzieren und dadurch den Energiespeicher vom Energieversorgungsnetz aufzuladen.

Insbesondere zum Hochfahren der Brennkraftmaschine kann vorgesehen sein, dass zum Hochfahren der Brennkraftmaschine mit dem Hilfsgenerator elektrische Energie vom Energiespeicher und/oder vom Energieversorgungsnetz durch den Leistungswandler hindurch zum Hilfsgenerator gespeist wird, vorzugsweise mittels Ansteuerung des Leistungswandlers.

Weitere Details und Vorteile der Erfindung werden im Lichte der beigefügten Zeichnungen ersichtlich, wobei:
- Fig. 1: ein schematisches Blockdiagramm einer vorgeschlagenen Kraftanlage zeigt,
- Fig. 2: die Kraftanlage gemäß Figur 1 ergänzt um eine Steuervorrichtung zeigt,
- Fig. 3: eine weitere Ausführungsform einer vorgeschlagenen Kraftanlage zeigt und
- Fig.4: ein detailliertes schematisches Diagramm eines Leistungswandlers zeigt.

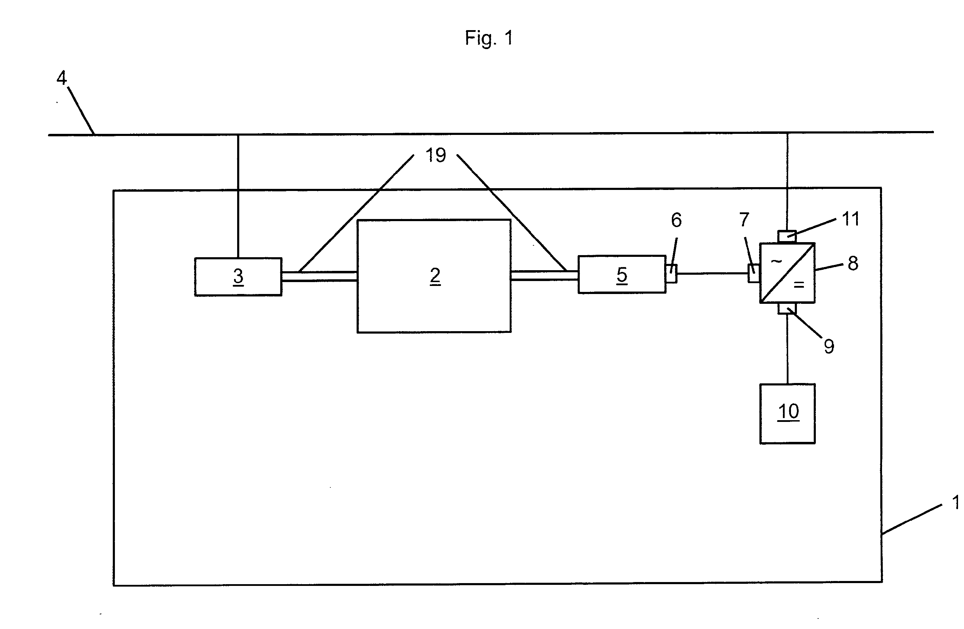

Figur 1 zeigt ein schematisches Blockdiagramm einer vorgeschlagenen Kraftanlage 1 in Form eines Gensets. Die Kraftanlage 1 umfasst eine Brennkraftmaschine 2 in Form eines Hubkolbengasmotors. Die Brennkraftmaschine 2 hat eine Motorwelle 19, mit der ein Hauptgenerator 3 und ein Hilfsgenerator 5 mechanisch gekoppelt sind. Der Hauptgenerator 3 und der Hilfsgenerator 5 sind über die Motorwelle 19 durch die Brennkraftmaschine 2 antreibbar. Der Hauptgenerator 3 ist elektrisch mit einem Energieversorgungsnetz 4 verbunden und liefert im Betriebszustand elektrische Energie an das Energieversorgungsnetz 4.

Der Hilfsgenerator 5 hat einen Anschluss 6, der mit einem ersten Wechselspannungsanschluss 7 eines Leistungswandlers 8 elektrisch verbunden ist. Ein Gleichspannungsanschluss 9 des Leistungswandlers 8 ist mit einem elektrischen Energiespeicher 10 elektrisch verbunden. Zum Laden des elektrischen Energiespeichers 10 fließt elektrische Energie vom Anschluss 6 des Hilfsgenerators 5 zum ersten Wechselspannungsanschluss 7 des Leistungswandlers 8. Der Leistungswandler 8 wandelt die vom Hilfsgenerator 5 bereitgestellte Wechselspannung in Gleichspannung um und stellt diese umgewandelte elektrische Energie über seinen Gleichspannungsanschluss 9 dem Energiespeicher 10 zur Verfügung. In diesem Beispiel ist die Flussrichtung der elektrischen Energie durch den Leistungswandler 8 vom ersten Wechselspannungsanschluss 7 zum Gleichspannungsanschluss 9.

Der Leistungswandler 8 hat weiters einen zweiten Wechselspannungsanschluss 11, der mit dem Energieversorgungsnetz 4 elektrisch verbunden ist. Dadurch kann der Energiespeicher 10 auch durch das Energieversorgungsnetz 4 geladen werden, indem elektrische Energie vom Energieversorgungsnetz 4 zum zweiten Wechselspannungsanschluss 11 des Leistungswandlers 8 fließt. Der Leistungswandler 8 wandelt die Wechselspannung, die durch das Energieversorgungsnetz 4 bereitgestellt wird, in Gleichspannung um und stellt diese umgewandelte elektrische Energie über seinen Gleichspannungsanschluss 9 dem Energiespeicher 10 zur Verfügung. In diesem Beispiel ist die Flussrichtung der elektrischen Energie durch den Leistungswandler 8 vom zweiten Wechselspannungsanschluss 11 zum Gleichspannungsanschluss 9.

Um die Brennkraftmaschine 2 zu unterstützen, zum Beispiel für Startzwecke oder wenn die Leistungsanforderung des Energieversorgungsnetzes 4 eine plötzliche Spitze hat, kann der Energiespeicher 10 gespeicherte Energie dem Hilfsgenerator 5 bereitstellen. In diesem Beispiel würde der Hilfsgenerator 5 als ein zusätzlicher Motor agieren und die Brennkraftmaschine 2 unterstützen und die Flussrichtung der elektrischen Energie durch den Leistungswandler 8 wäre vom Gleichspannungsanschluss 9 zum ersten Wechselspannungsanschluss 7.

Wenn es eine plötzliche Leistungsanforderung vom Energieversorgungsnetz 4 gibt, kann der Energiespeicher 10 gespeicherte Energie direkt dem Energieversorgungsnetz 4 bereitstellen. In diesem Beispiel wäre die Flussrichtung der elektrischen Energie durch den Leistungswandler 8 vom Gleichspannungsanschluss 9 zum zweiten Wechselspannungsanschluss 11. Als ein Beispiel kann der Hauptgenerator 3 eine Nennleistung von 10 MW haben und der Hilfsgenerator 5 kann eine Nennleistung von 2 MW haben. Der Leistungswandler 8 kann im Stande sein, etwa 2 MW bei etwa 600 V bis etwa 1200 V von Wechselspannung in Gleichspannung umzuwandeln und umgekehrt. Der Energiespeicher 10 kann als Superkondensator mit einer Kapazität von etwa 16 F ausgebildet sein.

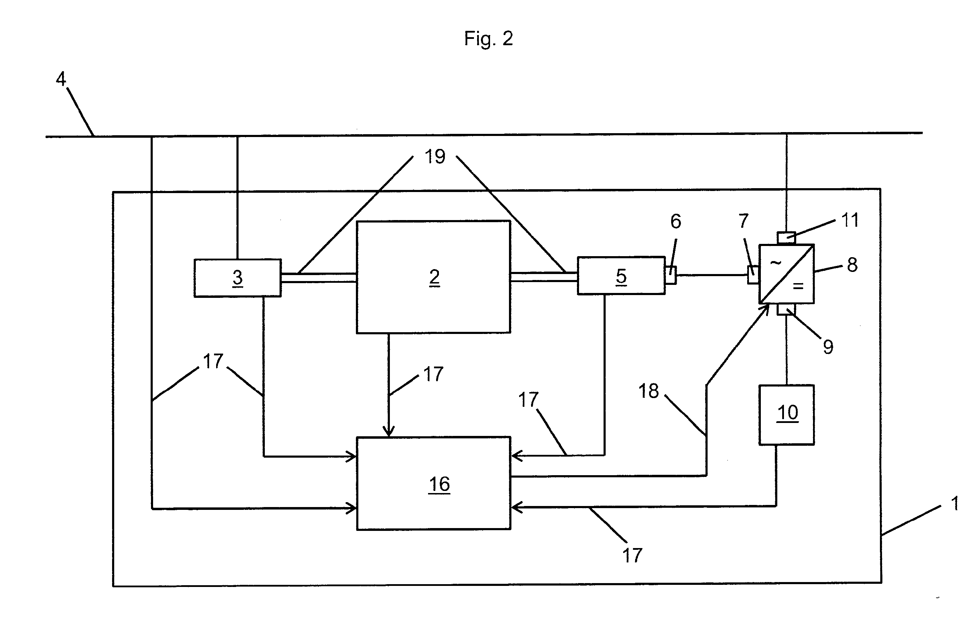

Figur 2 zeigt eine vorgeschlagene Kraftanlage 1 gemäß Figur 1. Zusätzlich zur Kraftanlage 1 der Figur 1 ist eine Steuervorrichtung 16 vorgesehen. Über Signalleitungen 17 werden der Steuervorrichtung 16 Betriebszustände von Brennkraftmaschine 2, Hauptgenerator 3, Hilfsgenerator 5, Energieversorgungsnetz 4 und Energiespeicher 10 signalisiert. Über wenigstens eine Steuerleitung 18 von der Steuervorrichtung 16 zum Leistungswandler 8 kommandiert die Steuervorrichtung 16 den Leistungswandler 8, sodass eine Flussrichtung von elektrischer Energie durch den Leistungswandler 8 gesteuert wird.

In diesem Beispiel werden die folgenden Betriebszustände über Signalleitungen 17 an die Steuervorrichtung 16 signalisiert: Leistungsanforderung vom Energieversorgungsnetz 4, aktuelle Leistung des Hauptgenerators 3, aktuelle Leistung des Hilfsgenerators 5, Motordrehzahl der Brennkraftmaschine 2 und aktuelle Energie und/oder Spannung, die im Energiespeicher 10 gespeichert ist. Über die wenigstens eine Steuerleitung 18 wird der Leistungswandler 8 durch die Steuervorrichtung 16 in Abhängigkeit von den Betriebszuständen kommandiert.

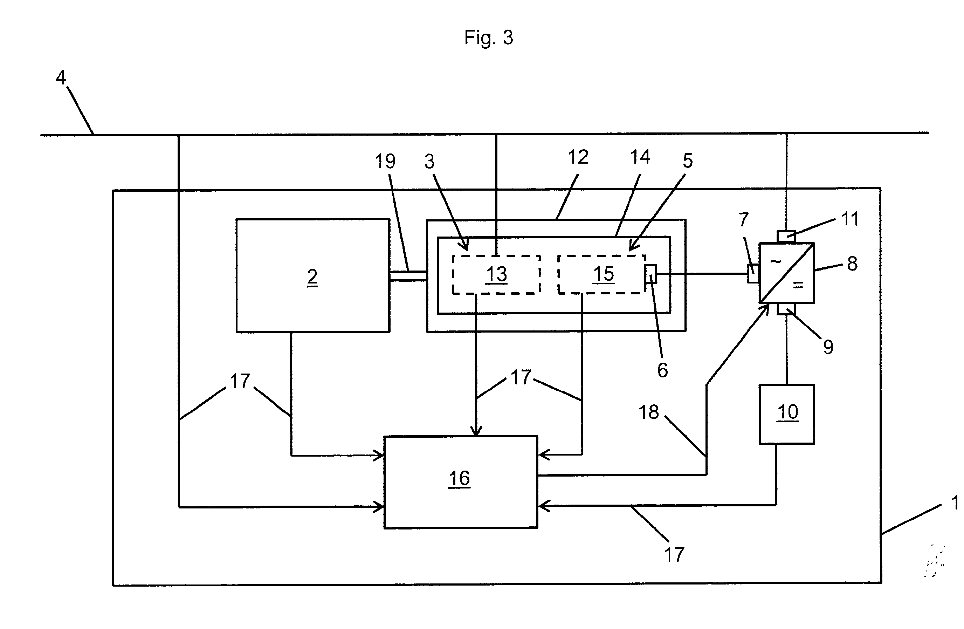

Figur 3 zeigt eine weitere Ausführungsform einer vorgeschlagenen Kraftanlage 1. In diesem Beispiel sind sowohl der Hauptgenerator 3 als auch der Hilfsgenerator 5 als ein einziger elektrischer Generator 12 ausgebildet, der durch die Brennkraftmaschine 2 über ihre Motorwelle 19 antreibbar ist. Der elektrische Generator 12 umfasst einen Stator 14, der mit einem Hauptwicklungssystem 13 und einem Hilfswicklungssystem 15 ausgestattet ist. Der Hauptgenerator 3 umfasst das Hauptwicklungssystem 13 und der Hilfsgenerator 5 umfasst das Hilfswicklungssystem 15. Eine solche Konfiguration hat den Vorteil, dass nur ein physischer elektrischer Generator 12 benötigt wird.

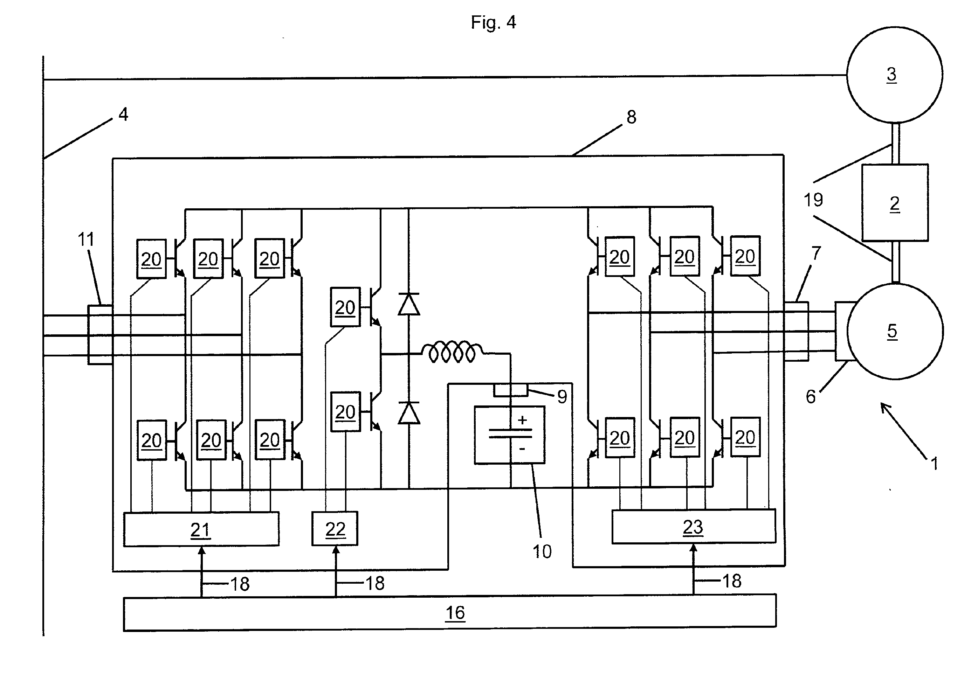

Figur 4 zeigt ein weiteres Beispiel einer vorgeschlagenen Kraftanlage 1. Ein Beispiel eines möglichen Leistungswandlers 8 ist detaillierter dargestellt. Eine Flussrichtung von elektrischer Energie durch den Leistungswandler 8 über seinen ersten Wechselspannungsanschluss 7, seinen Gleichspannungsanschluss 9 und seinen zweiten Wechselspannungsanschluss 11 wird gesteuert durch die Steuervorrichtung 16, Steuerleitungen 18, netzseitige Vierfachkonverter 21, Energiesteuerung 22, generatorseitige Vierfachwandler 23 und Treiberkarten 20 für korrespondierende Insulated Gate Bipolar Transistoren (IGBT). Die netzseitigen Vierfachwandler 21, die Energiesteuerung 22 und die generatorseitigen Vierfachwandler 23 sind Sekundärsteuerungen zwischen der Haupt-Steuervorrichtung 16 und den IGBT Treiberkarten 20. Über die Treiberkarten 20 sind die Gate-Anschlüsse der Transistoren (IGBTs) mit den Sekundärsteuerungen (netzseitige Vierfachwandler 21, Energiesteuerung 22 und generatorseitige Vierfachwandler 23) verbunden.

Unter Verwendung von digitalen Spannungssignalen (z.B. 0-12 V) können die Sekundärsteuerungen die Transistoren zwischen einem geöffneten und einem geschlossenen Betriebszustand steuern, sodass der elektrische Energiefluss im Leistungswandler 8 gesteuert werden kann. Insbesondere kann eine Flussrichtung von elektrischer Energie durch den Leistungswandler 8 über seinen ersten Wechselspannungsanschluss 7, seinen Gleichspannungsanschluss 9 und seinen zweiten Wechselspannungsanschluss 11 gesteuert werden.

Dadurch ist es beispielsweise möglich, dass bei einer Leistungsanforderung des Energieversorgungsnetzes 4 größer einer von Hauptgenerator 3 und Hilfsgenerator 5 bereitgestellten elektrischen Gesamtleistung eine im Energiespeicher 10 gespeicherte elektrische Energie durch den Leistungswandler 8 hindurch in das Energieversorgungsnetz 4 eingespeist wird, über den Gleichspannungsanschluss 9 und den zweiten Wechselspannungsanschluss 11.

Es ist auch möglich, dass bei einer Leistungsanforderung des Energieversorgungsnetzes 4 kleiner einer von Hauptgenerator 3 und/oder Hilfsgenerator 5 bereitgestellten elektrischen Leistung elektrische Energie vom Energieversorgungsnetz 4 und/oder vom Hilfsgenerator 5 durch den Leistungswandler 8 hindurch in den Energiespeicher 10 eingespeist wird, über den zweiten Wechselspannungsanschluss 11 und/oder den ersten Wechselspannungsanschluss 7 und den Gleichspannungsanschluss 9.

Es ist weiters möglich, dass zum Hochfahren der Brennkraftmaschine 2 mit dem Hilfsgenerator 5 elektrische Energie vom Energiespeicher 10 und/oder vom Energieversorgungsnetz 4 durch den Leistungswandler 8 hindurch zum Hilfsgenerator 5 gespeist wird, über den Gleichspannungsanschluss 9 und/oder den zweiten Wechselspannungsanschluss 11 und den ersten Wechselspannungsanschluss 7.

## Patentansprüche

1. Kraftanlage (1), insbesondere Genset, umfassend eine Brennkraftmaschine (2) und einen von der Brennkraftmaschine (2) antreibbaren Hauptgenerator (3), wobei der Hauptgenerator (3) mit einem Energieversorgungsnetz (4) elektrisch verbunden ist, weiters umfassend einen von der Brennkraftmaschine (2) antreibbaren Hilfsgenerator (5), wobei ein Anschluss (6) des Hilfsgenerators (5) mit einem ersten Wechselspannungsanschluss (7) eines Leistungswandlers (8) verbunden ist, wobei ein Gleichspannungsanschluss (9) des Leistungswandlers (8) mit einem elektrischen Energiespeicher (10) verbunden ist, **dadurch gekennzeichnet, dass** ein zweiter Wechselspannungsanschluss (11) des Leistungswandlers (8) mit dem Energieversorgungsnetz (4) verbunden ist.

2. Kraftanlage nach Anspruch 1, **dadurch gekennzeichnet, dass** ein Leistungsverhältnis von Nennleistung des Hauptgenerators (3) zu Nennleistung des Hilfsgenerators (5) mindestens 1,5 beträgt, wobei das Leistungsverhältnis vorzugsweise etwa 4 beträgt.

3. Kraftanlage nach Anspruch 1 oder 2, **dadurch gekennzeichnet, dass** der Hauptgenerator (3) und der Hilfsgenerator (5) als separate elektrische Generatoren ausgebildet sind.

4. Kraftanlage nach Anspruch 1 oder 2, **dadurch gekennzeichnet, dass** der Hauptgenerator (3) und der Hilfsgenerator (5) als ein einziger von der Brennkraftmaschine (2) antreibbarer elektrischer Generator (12) ausgebildet sind, wobei der Hauptgenerator (3) ein Hauptwicklungssystem (13) angeordnet an einem Stator (14) des Generators (12) umfasst und der Hilfsgenerator (5) ein Hilfswicklungssystem (15) angeordnet am Stator (14) umfasst.

5. Kraftanlage nach Anspruch 4, **dadurch gekennzeichnet, dass** ein Wicklungsverhältnis von Hauptwicklungssystem (13) zu Hilfswicklungssystem (15) mindestens 1,5 beträgt, wobei das Wicklungsverhältnis vorzugsweise etwa 4 beträgt.

6. Kraftanlage nach einem der Ansprüche 1 bis 5, **dadurch gekennzeichnet, dass** eine Steuervorrichtung (16) vorgesehen ist, wobei über wenigstens eine Signalleitung (17) wenigstens ein Betriebszustand von Energieversorgungsnetz (4) und/oder Brennkraftmaschine (2) und/oder Hauptgenerator (3) und/oder Hilfsgenerator (5) und/oder Energiespeicher (10) an die Steuervorrichtung (16) meldbar ist, wobei der Leistungswandler (8) in Abhängigkeit des wenigstens einen Betriebszustands von der Steuervorrichtung (16) über eine Steuerleitung (18) ansteuerbar ist.

7. Verfahren zum Betreiben einer Kraftanlage (1), insbesondere nach einem der Ansprüche 1 bis 6, umfassend eine Brennkraftmaschine (2) und einen von der Brennkraftmaschine (2) antreibbaren Hauptgenerator (3), wobei der Hauptgenerator (3) mit einem Energieversorgungsnetz (4) elektrisch verbunden ist, weiters umfassend einen von der Brennkraftmaschine (2) antreibbaren Hilfsgenerator (5), wobei ein Anschluss (6) des Hilfsgenerators (5) mit einem ersten Wechselspannungsanschluss (7) eines Leistungswandlers (8) verbunden ist, wobei ein Gleichspannungsanschluss (9) des Leistungswandlers (8) mit einem elektrischen Energiespeicher (10) verbunden ist, **dadurch gekennzeichnet, dass** ein zweiter Wechselspannungsanschluss (11) des Leistungswandlers (8) mit dem Energieversorgungsnetz (4) verbunden ist, wobei in Abhängigkeit wenigstens eines Betriebszustands von Energieversorgungsnetz (4) und/oder Brennkraftmaschine (2) und/oder Hauptgenerator (3) und/oder Hilfsgenerator (5) und/oder Energiespeicher (10) eine Flussrichtung elektrischer Energie durch den Leistungswandler (8) hindurch gesteuert wird.

8. Verfahren nach Anspruch 7, **dadurch gekennzeichnet, dass** bei einer Leistungsanforderung des Energieversorgungsnetzes (4) größer einer von Hauptgenerator (3) und Hilfsgenerator (5) bereitgestellten elektrischen Gesamtleistung eine im Energiespeicher (10) gespeicherte elektrische Energie durch den Leistungswandler (8) hindurch in das Energieversorgungsnetz (4) eingespeist wird, vorzugsweise mittels Ansteuerung des Leistungswandlers (8).

9. Verfahren nach Anspruch 7 oder 8, **dadurch gekennzeichnet, dass** bei einer Leistungsanforderung des Energieversorgungsnetzes (4) kleiner einer von Hauptgenerator (3) und/oder Hilfsgenerator (5) bereitgestellten elektrischen Leistung elektrische Energie vom Energieversorgungsnetz (4) und/oder vom Hilfsgenerator (5) durch den Leistungswandler (8) hindurch in den Energiespeicher (10) eingespeist wird, vorzugsweise mittels Ansteuerung des Leistungswandlers (8).

10. Verfahren nach einem der Ansprüche 7 bis 9, **dadurch gekennzeichnet, dass** zum Hochfahren der Brennkraftmaschine (2) mit dem Hilfsgenerator (5) elektrische Energie vom Energiespeicher (10) und/oder vom Energieversorgungsnetz (4) durch den Leistungswandler (8) hindurch zum Hilfsgenerator (5) gespeist wird, vorzugsweise mittels Ansteuerung des Leistungswandlers (8).
